# EUROPÄISCHE PATENTSCHRIFT

(11) **EP 2 596 719 B1**
(45) Veröffentlichungstag und Bekanntmachung des Hinweises auf die Patenterteilung: **30.05.2018**
(21) Anmeldenummer: 12190820.6
(22) Anmeldetag: 07.09.2009
(51) Int. Cl.: A47B 88/00, B25B 7/02, B21D 19/12

(54) **Schubkasten**
Drawer
Tiroir coulissant

(30) Priorität: 23.10.2008 DE 202008014135 U; 28.08.2009 DE 202009005203 U
(43) Veröffentlichungstag der Anmeldung: 29.05.2013
(62) Teilanmeldung aus: 09782704.2
(73) Patentinhaber: Paul Hettich GmbH & Co. KG, 32278 Kirchlengern (DE)
(72) Erfinder: Babucke-Runte, Guido, 33758 Schloß Holte-Stukenbrock (DE); Käthler, Andreas, 32278 Kirchlengern (DE); Stuffel, Andreas, 31675 Bückeburg (DE); Meyer, Helmut, 31675 Bückeburg (DE); Meyer, Bernd, 32469 Petershagen (DE)
(74) Vertreter: Dantz, Jan Henning

(56) Entgegenhaltungen:
- DE-U1- 9 113 477
- DE-U1- 9 303 903

## Beschreibung

Die vorliegende Erfindung betrifft einen Schubkasten gemäß dem Oberbegriff des Anspruchs 1.

Die in Rede stehenden Schubkästen sind in vielen Ausführungen bekannt. Sie bestehen in der Regel aus zwei Seitenzargen, einem von diesen Seitenzargen gehaltenen Schubkastenboden sowie einer Frontblende und einer Rückwand, die in der Regel ebenfalls an den Seitenzargen festgelegt sind. Zur Halterung des Schubkastenbodens ist aus dem Stand der Technik beispielsweise bekannt, dass der Schubkastenboden von Horizontalstegen an den Zargen gehalten wird, wobei diese Horizontalstege Prägungen aufweisen, die in Nuten des Bodens hineinragen. Ebenso ist es bekannt, eine Anbindung des Schubkastenbodens an die Seitenzargen durch einen nach unten weisenden Steg des Schubkastenbodens zu erreichen, welcher in eine offene Nut der Zargenseitenwand hineinragt.

Die zuvor beschriebene Halterung der Schubkastenböden an den Zargen ist konstruktiv aufwendig, da die Schubkastenböden mit Nuten, Bohrungen oder auch Stegen versehen werden müssen, um an der Zarge wirksam gehalten zu werden. Außerdem können bei diesen Ausführungen nur Böden einer definierten Dicke eingesetzt werden.

Aus dem Stand der Technik ist auch ein Schubkastenaufbau bekannt, der den Einsatz unterschiedlich dicker Böden erlaubt. Dabei weisen die Schubkastenseitenwände im unteren Bereich ein stufenförmiges Profil auf, welches als Auflagefläche für verschieden starke Schubkastenböden dienen kann. Nachteilig ist hier, dass diese Art der Konstruktion unterschiedliche Breiten von Schubkastenböden bedingt.

Aus der DE 93 03 903 U1 und der DE 91 13 477 U1 sind Schubkästen bekannt, bei denen am unteren Rand der Schubkastenzarge Krallen ausgebildet sind, die sich in das Material der Unterseite des Schubkastenbodens oder in eine Nut in der Unterseite des Schubkastenbodens eingraben.

Aufgabe der vorliegenden Erfindung ist es daher, einen Schubkasten bereit zu stellen, der in konstruktiv einfacher Weise den Einsatz und den Einbau unterschiedlich dicker Schubkastenböden erlaubt ohne zusätzliche Nachbearbeitung des Schubkastenbodens oder der diesen haltenden Schubkastenzargen.

Diese Aufgabe wird durch einen Schubkasten mit den Merkmalen des Anspruchs 1 bzw. des Anspruchs 6 gelöst.

Weitere Merkmale der Erfindung sind Gegenstand der Unteransprüche.

Der Erfindung liegt ganz allgemein der Gedanke zugrunde, die Konstruktion der Schubkastenzargen und der Schubkastenböden so zu gestalten, dass in einfachster Weise Schubkastenböden unterschiedlicher Dicke verbaut werden können. Dazu sind erfindungsgemäß Befestigungsmittel vorgesehen, die als mit einer aus den zur Schubkastenmitte zeigenden Seitenwänden der Schubkastenzargen zur Schubkastenmitte hin hervorstehenden Nase zusammen wirkende Klemmmittel mit variablem Klemmabstand ausgebildet sind und mit denen Schubkastenböden unterschiedlicher Dicke festlegbar sind.

Die Befestigungsmittel sind einstückig mit den Schubkastenzargen oder den Verbindungselementen ausgebildet. Der untere Rand der Schubkastenzarge ist dabei als parallel zur Unterseite des Schubkastenbodens ausgerichteter und zur Klemmung des Schubkastenbodens aufgerollter Steg ausgebildet. Alternativ sind die Befestigungsmittel als eine Seitenkante des Schubkastenbodens zumindest teilweise umgreifenden Klemmsteg an einem unteren Rand der Schubkastenzarge ausgebildet, wobei an dem Klemmsteg parallel zur Unterseite des Schubkastenbodens ausgerichtete und zur Klemmung des Schubkastenbodens aufrollbare Zungen ausgebildet sind.

Der aufgerollte Steg bzw. die aufgerollten Zungen werden mittels geeigneter Werkzeuge gebildet, die den Schubkastenboden zwischen den Schubkastenzargen verklemmen. Mit einem Werkzeug zum Festklemmen eines Schubkastenbodens eines Schubkastens ist in einfacher Weise der Einbau unterschiedlich dicker Schubkastenböden ermöglicht. Dabei wird der Schubkastenboden zwischen die Schubkastenzargen geschoben.

In den beigefügten Zeichnungen sind Ausführungsbeispiele der Erfindung dargestellt, die im Folgenden näher beschrieben werden.

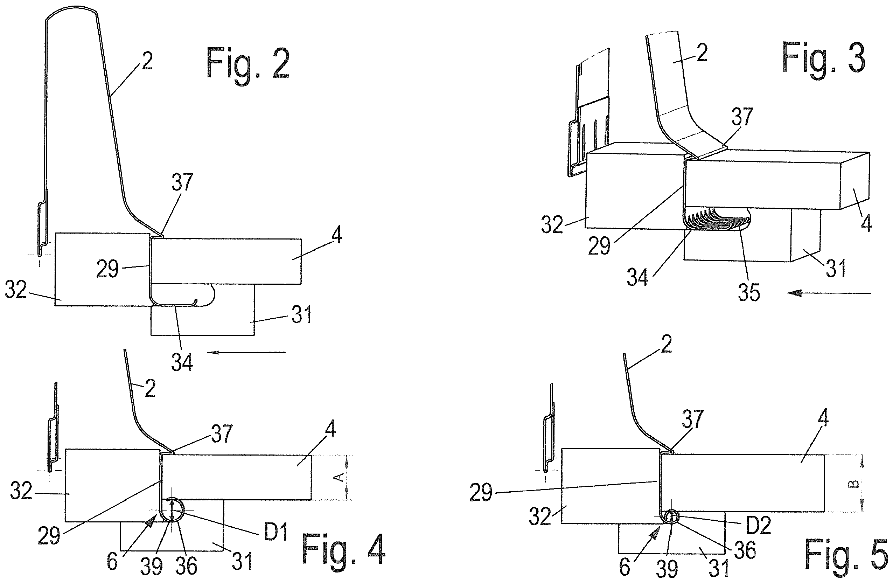

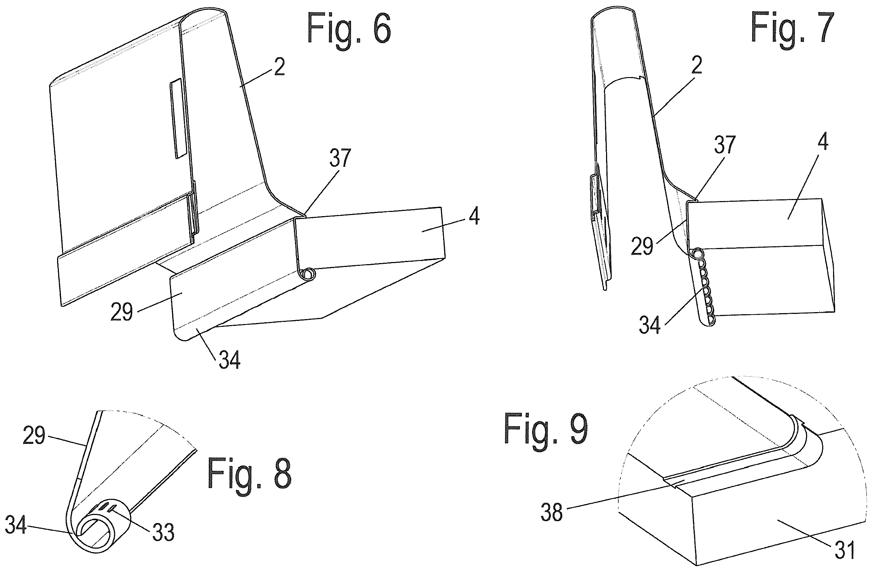

Es zeigen:
- Figur 1: eine schematisch dargestellte perspektivische Ansicht von unten auf einen ohne Frontblende gezeigten Schubkasten mit zwei Schubkastenzargen und einem mit Befestigungsmitteln an diesen angebrachten Schubkastenboden,
- Figur 2: eine Seitenansicht eines Ausführungsbeispiels eines Schubkastens mit Befestigungssteg an einer Schubkastenzarge,
- Figur 3: eine perspektivische Ansicht der Seitenzarge von Figur 1 mit geschlitztem Befestigungssteg,
- Figuren 4 und 5:: zwei Seitenansichten mit zu unterschiedlichen Radien aufgerollten Befestigungsstegen,
- Figuren 6 und 7: zwei weitere perspektivische Ansichten der Schubkastenzarge mit festgeklemmtem Schubkastenboden
- Figur 8: eine Detailansicht einer Klemmzunge mit Prägungen und
- Figur 9: eine Detailansicht eines Rollschiebers mit Aussparung.
- Figur 10: eine perspektivische Ansicht eines weiteren Ausführungsbeispiels einer Seitenzarge,
- Figuren 11 und 12: zwei perspektivische Ansichten der Seitenzarge aus Figur 9 mit zu unterschiedlichen Radien aufgerollten Klemmzungen,
- Figur 13: eine perspektivische Ansicht des Ausführungsbeispiels der Seitenzarge aus Figur 9 mit eingelegtem Schubkastenboden, und
- Figuren 14 und 15: zwei perspektivische Ansichten der Seitenzarge aus Figur 9 mit zu unterschiedlichen Radien aufgerollten Klemmzungen mit fixiertem Schubkastenboden.

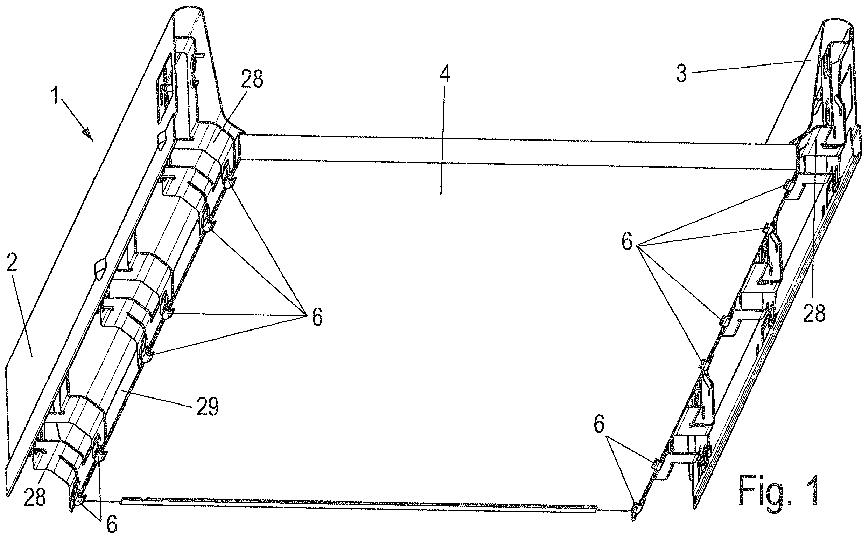

Die Figur 1 zeigt einen Schubkastenboden 4, der zwischen zwei Schubkastenzargen 2, 3 mit Hilfe von Befestigungsmitteln 6 gehalten ist. Die Schubkastenzargen 2, 3 bestehen in diesem Ausführungsbeispiel aus u-förmigen Hohlprofilen, in denen mehrere Verbindungselemente 28 zur Verbindung der Schubkastenzargen 2, 3 mit einer hier nicht weiter dargestellten und beschriebenen Auszugsvorrichtung zum Auszug des Schubkastens aus einem Möbelkorpus eingesetzt sind.
Gemäß der in den Figuren 2 bis 9 dargestellten Ausführungsvarianten ist das Befestigungsmittel 6 einstückig mit der Schubkastenzarge 2 ausgebildet. Dazu ist das Befestigungsmittel 6 als Klemmsteg 29 ausgebildet, der an einem unteren Rand der Schubkastenzarge 2 ausgebildet ist. Dieser Klemmsteg 29 umgreift zumindest teilweise eine Seitenkante des Schubkastenbodens 4, wie in den Figuren 25 bis 28 gezeigt ist. Der untere Rand der Schubkastenzarge 2 ist dabei als parallel zur Unterseite des Schubkastenbodens 4 ausgerichteter und zur Klemmung des Schubkastenbodens 4 aufgerollter Steg 34 ausgebildet. Dieser Steg 34 ist bevorzugt vom Zargenrand her zum Klemmsteg 29 hin geschlitzt in Gestalt von nebeneinanderliegenden Zungen 35 ausgebildet. Durch dieses Aufschlitzen des Randes der Schubkastenzarge 2 in einzelne Zungen 35 wird erreicht, dass die aufzubringende Kraft zur Formgebung des Zargenrandes klein gehalten wird. Auf der Oberfläche des Steges 34 beziehungsweise den einzelnen Zungen 35 sind bevorzugt Prägungen 33 ausgebildet, welche geeignet sind, den Schubkastenboden 4 zu fixieren, insbesondere sich in diesem zu verkrallen. Diese Prägungen 33 verlaufen bevorzugt parallel oder senkrecht zur Längsausdehnung der Zungen 35 beziehungsweise des Steges 34. Bei der Ausbildungsform, bei der die Prägungen 33 senkrecht zur Längsausdehnung der Zungen 35 beziehungsweise des Steges 34 verlaufen, wirkt die Fixierung besonders günstig in Auszugsrichtung des Schubkastens.

In den Figuren 2 bis 5 ist des Weiteren ein Werkzeug zum Festklemmen eines Schubkastenbodens 4 eines Schubkastens gezeigt, dass eine Matrize 32 und einen Rollschieber 31 aufweist. Man benötigt zum Aufrollen der Zungen 35 beziehungsweise des Steges 34 für unterschiedlich dicke Schubkastenböden 4 nur eine Matrize 32, aber unterschiedlich ausgebildete Rollschieber 31. Die Rollschieber 31 unterscheiden sich dabei durch eine der Dicke des festzuklemmenden Schubkastenbodens 4 angepassten Radienkontur 36, um den Steg 34 beziehungsweise die Zungen 35 mit entsprechendem Radius aufzurollen und dadurch den Schubkastenboden 4 zwischen der so entstandenen Klemmrolle 39 und einer weiter oben an der Schubkastenzarge 2 befindlichen Nase 37 festzuklemmen. Beim Montagevorgang dient die Matrize 32 als Gegenhalter, während der Rollschieber 31 sich in Richtung Matrize 32 bewegt und mit seiner Radienkontur 36 die Zungen 35 beziehungsweise den Steg 34 der Zargen 2 zu Klemmrollen 39 formt. Für die gemäß einer Ausführungsform an den Steg 34 beziehungsweise den Zungen 35 ausgebildeten Prägungen 33 ist der Rollschieber 31 auf seiner dem Steg 34 beziehungsweise den Zungen 35 zugewandten Oberfläche mit einer der Tiefe dieser Prägungen 33 entsprechenden Aussparung 38 ausgebildet, damit die Prägungen 33 am horizontalen Steg 34 bzw. den Zungen 35 der Zarge 2 nicht beschädigt werden.

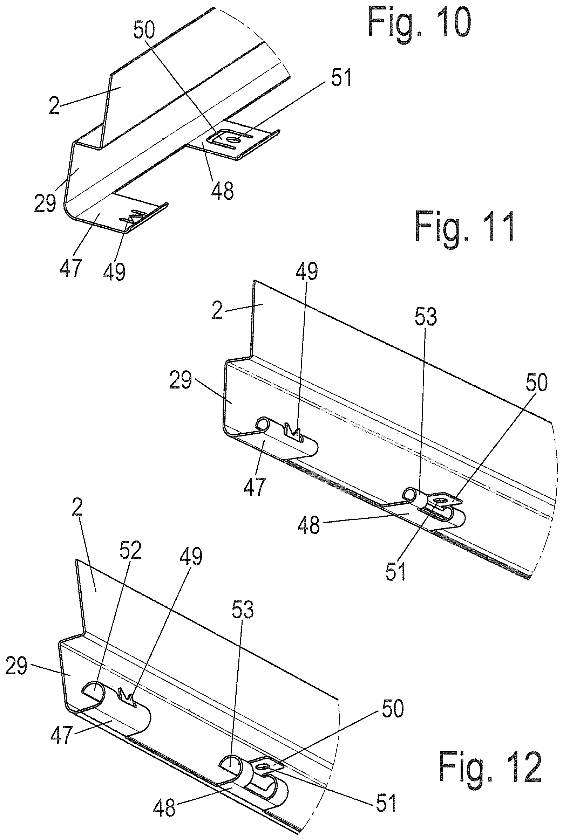

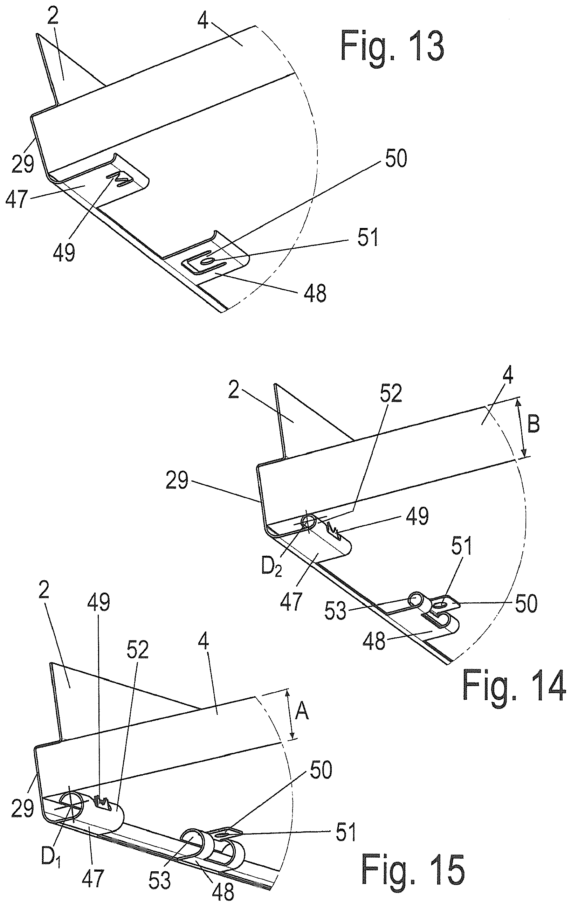

Gemäß einer weiteren, in den Figuren 10 bis 15 dargestellten Ausführungsvariante sind an dem Klemmsteg 29 parallel zur Unterseite des Schubkastenbodens 4 ausgerichtete und zur Klemmung des Schubkastenbodens 4 aufrollbare Zungen 47, 48 ausgebildet. Wie insbesondere in den Figuren 10, 11, 13 und 14 gut zu erkennen ist, sind diese Zungen 47, 48 zu Klemmzungen 52, 53 mit variablem Durchmesser D1, D2 aufrollbar, so dass mit diesen Schubkastenböden 4 unterschiedlicher Dicke A, B geklemmt werden können. Bei der hier gezeigten Ausführungsvariante ist eine der Zungen 47 mit einer Kralle 49 versehen, die im aufgerollten Zustand der Zunge 47 aus der Zungenfläche ausgestellt ist und so den Schubkastenboden 4 fixiert, insbesondere sich mit den Krallenspitzen der Kralle 49 in den Schubkastenboden 4 eingräbt. Eine zweite Zunge 48 ist mit einer Lasche 50 versehen, die im aufgerollten Zustand der Zunge 48 ebenfalls aus der Zungenfläche ausgestellt ist, sich dabei an den Schubkastenboden 4 anschmiegt und diesen so fixiert. Insbesondere ist diese Lasche 50 mit einer Lochung 51 versehen, durch die Befestigungsmittel, beispielsweise Schrauben, durchsteckbar und in den Schubkastenboden 4 einschraubbar sind und so den Schubkastenboden 4 zusätzlich zur durch die aufgerollte Zunge 48 bewirkten Klemmung fixieren. Alle in den vorangegangenen Figuren gezeigten Ausführungsvarianten des Befestigungsmittels sind auch in anderen als den hier gezeigten Kombinationen der Rastschenkelausbildungen beziehungsweise Winkelbereichs und Profilausbildungen im Rahmen der durch die Patentansprüche definierten Erfindung denkbar. Mit den oben beschriebenen Befestigungsmitteln ist es ermöglicht, unterschiedlich dicke Schubkastenböden zu verbauen, ohne diese Böden vorab in zusätzlichen Arbeitsschritten bearbeiten zu müssen. Es sind sowohl Holz-, Kunststoffböden unterschiedlicher Dicke als auch Blechschubkastenböden mit umgebogenen Seitenkanten einsetzbar. Auch Schubkastenböden mit 2 Decklagen und abstandsgebendem Gewirke, wie sie als Waben- und Sandwichböden bekannt sind, lassen sich mit diesen Befestigungsmitteln an den Schubkastenzargen befestigen.

### Bezugszeichen

- 2: Zarge
- 3: Zarge
- 4: Schubkastenboden
- 6: Befestigungsmittel
- 28: Verbindungselement
- 29: Klemmsteg
- 31: Rollschieber
- 32: Matrize
- 33: Prägung
- 34: Steg
- 35: Zunge
- 36: Radienkontur
- 37: Nase
- 38: Aussparung
- 39: Klemmrolle
- 47: Zunge
- 48: Zunge
- 49: Kralle
- 50: Lasche
- 51: Lochung
- 52: Klemmzunge mit kleinem Durchmesser
- 53: Klemmzunge mit großem Durchmesser
- A: Kleine Bodendicke
- B: Große Bodendicke
- D1: Großer Durchmesser Klemmrolle
- D2: Kleiner Durchmesser Klemmrolle

## Patentansprüche

1. Schubkasten mit Schubkastenzargen (2, 3), an denen Befestigungsmittel (6) zur Befestigung eines Schubkastenbodens (4) angeordnet sind, wobei an den zur Schubkastenmitte zeigenden Seitenwänden der Schubkastenzargen (2, 3) jeweils eine Nase (37) zur Schubkastenmitte hin hervorsteht, gegen deren senkrecht zu der jeweiligen Zargenseitenwand stehenden Unterseite eine Oberseite des Schubkastenbodens (4) andrückbar ist, wobei die Befestigungsmittel (6) einstückig mit den Schubkastenzargen (2, 3) und als mit der Nase (37) zusammen wirkende Klemmmittel mit variablem Klemmabstand ausgebildet und dass mit den Befestigungsmitteln (6) Schubkastenböden (4) unterschiedlicher Dicke festlegbar sind, **dadurch gekennzeichnet, dass** der untere Rand der Schubkastenzarge (2, 3) als parallel zur Unterseite des Schubkastenbodens (4) ausgerichteter und zur Klemmung des Schubkastenbodens (4) aufgerollter Steg (34) ausgebildet ist.

2. Schubkasten nach Anspruch 1, **dadurch gekennzeichnet, dass** die Befestigungsmittel (6) als eine Seitenkante des Schubkastenbodens (4) zumindest teilweise umgreifenden Klemmsteg (29) an einem unteren Rand der Schubkastenzarge (2, 3) ausgebildet sind.

3. Schubkasten nach Anspruch 1 oder 2, **dadurch gekennzeichnet, dass** der Steg (34) von dem Zargenrand her zum Klemmsteg (29) hin geschlitzt in Gestalt von nebeneinander liegenden Zungen (35) ausgebildet ist.

4. Schubkasten nach einem der vorstehenden Ansprüche, **dadurch gekennzeichnet, dass** auf dem Steg (34) bzw. den einzelnen Zungen (35) Prägungen (33) ausgebildet sind, die geeignet sind, den Schubkastenboden (4) zu fixieren.

5. Schubkasten nach Anspruch 4, **dadurch gekennzeichnet, dass** die Prägungen (33) parallel oder senkrecht zur Längsausdehnung des Steges (34) bzw. der Zungen (35) verlaufen.

6. Schubkasten nach Anspruch 1, wobei die Befestigungsmittel (6) als eine Seitenkante des Schubkastenbodens (4) zumindest teilweise umgreifenden Klemmsteg (29) an einem unteren Rand der Schubkastenzarge (2, 3) ausgebildet sind, und wobei an dem Klemmsteg (29) parallel zur Unterseite des Schubkastenbodens (4) ausgerichtete und zur Klemmung des Schubkastenbodens (4) aufgerollte Zungen (47, 48) ausgebildet sind.

7. Schubkasten nach Anspruch 6, **dadurch gekennzeichnet, dass** die Zungen (47, 48) zu Klemmzungen mit variablem Durchmesser (D₁, D₂) aufrollbar sind.

8. Schubkasten nach Anspruch 7, **dadurch gekennzeichnet, dass** zumindest eine der Zungen (47, 48) mit einer Kralle (49) versehen ist, die im aufgerollten Zustand der Zunge (47, 48) aus der Zungenfläche (47, 48) ausgestellt ist und den Schubkastenboden (4) fixiert.

9. Schubkasten nach Anspruch 6 oder 7, **dadurch gekennzeichnet, dass** zumindest eine der Zungen (47, 48) mit einer Lasche (50) versehen ist, die im aufgerollten Zustand der Zunge (47, 48) aus der Zungenfläche ausgestellt ist, sich an den Schubkastenboden (4) anschmiegt und diesen fixiert.

10. Schubkasten nach Anspruch 9, **dadurch gekennzeichnet, dass** die Lasche (50) zur Fixierung des Schubkastenboden (4) mit einer Lochung (51) versehen ist.

11. Schubkasten nach einem der vorstehenden Ansprüche, **dadurch gekennzeichnet, dass** die Schubkastenzargen (2, 3) aus u-förmigen Hohlprofilen und mehreren Verbindungselementen (28) zur Verbindung der Schubkastenzargen (2, 3) mit jeweiligen Auszugsvorrichtungen bestehen, wobei die Verbindungselemente (28) in den Hohlprofilen eingesetzt sind.

## Claims

1. A drawer comprising drawer casings (2, 3) on which fastening means (6) are arranged for securing a drawer bottom (4), wherein a nose (37) projects towards the centre of the drawer on each of the side walls of the drawer casings (2, 3) that face the centre of the drawer, a top side of the drawer bottom (4) can be pressed against the bottom side thereof which is located perpendicularly to the respective casing side wall, wherein the fastening means (6) are configured in one piece with the drawer casings (2, 3) and as clamping means having a variable clamping distance, which cooperate with the nose (37) and that drawer bottoms (4) of different thickness can be secured with the fastening means (6), **characterized in that** the lower edge of the drawer casings (2, 3) is configured as a web (34) aligned parallel to the underside of the drawer bottom (4) and rolled up for clamping the drawer bottom (4).

2. The drawer according to claim 1, **characterised in that** the fastening means (6) are formed as a clamping web (29) which at least partially embraces a lateral edge of the drawer bottom (4) on a lower edge of the drawer casing (2, 3).

3. The drawer according to claim 1 or 2, **characterised in that** the web (34) is configured in the form of adjacently located tongues (35) which are slitted from the casing edge towards the clamping web (29).

4. The drawer according to one of the preceding claims, **characterised in that** embossings (33) suitable for fixing the drawer bottom (4) are formed on the web (34) or the individual tongues (35).

5. The drawer according to claim 4, **characterised in that** the embossings (33) run parallel or perpendicular to the longitudinal extension of the web (34) or the tongues (35).

6. The drawer according to claim 1, wherein the fastening means (6) are formed as a clamping web (29) which at least partially embraces a lateral edge of the drawer bottom (4) at a lower edge of the drawing casing (2, 3) and wherein tongues (47, 48) aligned parallel to the underside of the drawer bottom (4) and rolled up for clamping the drawer bottom (4) are formed on the clamping web (29).

7. The drawer according to claim 6, **characterised in that** the tongues (47, 48) can be rolled up to form clamping tongues of variable diameter (D₁, D₂).

8. The drawer according to claim 7, **characterised in that** at least one of the tongues (47, 48) is provided with a claw (49) which in the rolled up state of the tongue (47, 48) is issued from the tongue surface (47, 48) and fixes the drawer bottom (4).

9. The drawer according to claim 6 or 7, **characterised in that** at least one of the tongues (47, 48) is provided with a tab (50) which in the rolled up state of the tongue (47, 48) is issued from the tongue surface, nestles against the drawer bottom (4) and fixes this.

10. The drawer according to claim 9, **characterised in that** the tab (50) is provided with a perforation (51) for fixing the drawer bottom (4).

11. The drawer according to one of the preceding claims, **characterized in that** the drawer casings (2, 3) consist of u-shaped hollow profiles and a plurality of connecting elements (28) for connecting the drawer casings (2, 3) to the respective withdrawal devices, wherein the connecting elements (28) are inserted in the hollow profiles.

## Revendications

1. Tiroir avec des châssis de tiroir (2, 3) sur lesquels sont disposés des moyens de fixation (6) pour la fixation d'un fond de tiroir (4), dans lequel un ergot (37) contre la face inférieure, perpendiculaire à la paroi latérale de châssis correspondante, duquel une face supérieure du fond de tiroir (4) peut être pressée dépasse vers le milieu du tiroir à partir des parois latérales du châssis de tiroir (2, 3) tournées vers le milieu du tiroir, dans lequel les moyens de fixation (6) sont formés d'une pièce avec le châssis de tiroir (2, 3) et conformés comme des moyens de serrage à écartement de serrage variable et coopérant avec l'ergot (37) et dans lequel les moyens de fixation (6) peuvent fixer des fonds de tiroir (4) d'épaisseur différente, **caractérisé en ce que** le bord inférieur du châssis de tiroir (2, 3) est conformé comme une aile (34) orientée vers la face inférieure du fond de tiroir (4) et enroulée de façon à serrer le fond de tiroir (4).

2. Tiroir selon la revendication 1, **caractérisé en ce que** les moyens de fixation (6) sont conformés comme une aile de serrage (29) entourant au moins en partie un bord latéral du fond de tiroir (4) sur un bord inférieur du châssis de tiroir (2, 3).

3. Tiroir selon la revendication 1 ou 2, **caractérisé en ce que** l'aile (34) est fendue du bord du châssis à l'aile de serrage (29) de façon à former plusieurs languettes (35) côte à côte.

4. Tiroir selon l'une des revendications précédentes, **caractérisé en ce que** des empreintes (33) sont formées sur l'aile (34) ou sur les différentes languettes (35) et permettent de fixer le fond de tiroir (4).

5. Tiroir selon la revendication 4, **caractérisé en ce que** les empreintes (33) sont parallèles ou perpendiculaires à l'étendue longitudinale de l'aile (34) ou des languettes (35).

6. Tiroir selon la revendication 1, dans lequel les moyens de fixation (6) sont conformés comme une aile de serrage (29) entourant au moins partiellement un bord latéral du fond de tiroir (4) sur un bord inférieur du châssis de tiroir (2, 3) et dans lequel sont formées sur l'aile de serrage (29) des languettes (47, 48) orientées parallèlement à la face inférieure du fond de tiroir (4) et enroulées de façon à serrer le fond de tiroir (4).

7. Tiroir selon la revendication 6, **caractérisé en ce que** les languettes (47, 48) peuvent être enroulées de façon à former des languettes de serrage de diamètre variable (D₁, D₂).

8. Tiroir selon la revendication 7, **caractérisé en ce qu'**au moins une des languettes (47, 48) est munie d'une griffe (49) qui dépasse de la surface de la languette (47, 48) quand la languette (47, 48) est enroulée et fixe le fond de tiroir (4).

9. Tiroir selon la revendication 6 ou 7, **caractérisé en ce qu'**au moins une des languettes (47, 48) est munie d'une patte (50) qui dépasse de la surface de la languette quand la languette (47, 48) est enroulée, s'applique sur le fond de tiroir (4) et fixe celui-ci.

10. Tiroir selon la revendication 9, **caractérisé en ce que** la patte (50) est munie d'une perforation (51) en vue de la fixation du fond de tiroir (4).

11. Tiroir selon l'une des revendications précédentes, **caractérisé en ce que** le châssis de tiroir (2, 3) est formé de profilés creux en forme de U et de plusieurs éléments d'assemblage (28) pour l'assemblage du châssis de tiroir (2, 3) avec des dispositifs d'extraction correspondants, lesquels éléments d'assemblage (28) sont insérés dans les profilés creux.
